# EUROPÄISCHE PATENTANMELDUNG

(11) **EP 1 780 003 A1**
(43) Veröffentlichungstag der Anmeldung: **02.05.2007**
(21) Anmeldenummer: 05405607.2
(22) Anmeldetag: 26.10.2005
(51) Int. Cl.: B32B 7/02, B32B 27/32

(54) **Schockabsorbierender Siegelfilm für ein Beutellaminat**

(71) Anmelder: Alcan Technology & Management Ltd., 8212 Neuhausen am Rheinfall (CH)
(72) Erfinder: Bevilacqua, Markus, 8213 Neunkirch (CH); Holzwarth, Gunther, 8212 Neuhausen (CH); Jammet, Jean-Claude, 8212 Neuhausen (CH)

(57) **Zusammenfassung**

Ein Siegelfilm (16) mit schockabsorbierenden Eigenschaften für ein Verpackungslaminat (10) zur Herstellung von Beuteln mit wenigstens einer Siegelnaht (18) besteht aus wenigstens drei Schichten (S1...S7), wobei einander benachbarte Schichten unterschiedliche Bruchzähigkeiten aufweisen. Diese Anordnung hat zur Folge, dass bei einem Sturz eines Beutels ein von einer Siegelnahtwurzel des Beutels ausgehender Riss in einer zähelastischen Schicht durch Aufnahme der in die Siegelnaht eingeleiteten kinetischen Energie durch plastische Verformung gestoppt wird.

## Beschreibung

Die Erfindung betrifft einen Siegelfilm mit schockabsorbierenden Eigenschaften für ein Verpackungslaminat zur Herstellung von Beuteln mit wenigstens einer Siegelnaht sowie ein Verpackungslaminat mit einem Siegelfilm.

Güter des täglichen Bedarfs werden oft in Beutel abgepackt. Ein klassisches Beutelsystem ist der Standbeutel bzw. die "Doy-Pack" Beutelform. Je nach Füllgut und Anforderungen werden dazu Materialaufbauten mit zwei bis vier Hauptschichten verwendet.

Typische Schichtaufbauten von Verpackungslaminaten zur Herstellung von Beuteln für flüssige, flüssig/stückige und pastöse Füllgüter mit einer langen Haltbarkeit von mehr als dreissig Tagen sind beispielsweise
PET / Aluminium / oPA / PE (oder PP)
PET / vakuumbeschichtete Barriere / oPA / PE (oder PP)
PET / vakuumbeschichtete Barriere / PET / PE (oder PP)
PET / PE :EVOH:PE (oder PP:EVOH:PP)

Die Kombination der verschiedenen Schichten führt zu den gewünschten Eigenschaften. PET (Polyethylenterephthalat) ist thermoresisitent, ergibt eine glänzende Oberfläche und ist gut bedruckbar, oPA (orientiertes Polyamid) führt zu einer hohen Durchstossfestigkeit und Knickbruchbeständigkeit, eine Aluminiumfolie, eine Vakuumbeschichtung mit SiOₓ oder eine Schicht aus EVOH (Ethyl-Vinyl-Alkohol) als Barriereschicht erhöht die Durchtrittssperrwirkung gegen Wasserdampf, Sauerstoff und andere Gase sowie Fremdaromen. Die Dicken der einzelnen Schichten variieren je nach Anwendungsfall. Typische Filmschichtdicken sind: PET 12 µm, Aluminium 8-12 µm, oPA 12 - 15 µm, PE und PP 50 - 150 µm. Die Filme bzw. Folien werden typischerweise mit Polyurethan-Klebstoffen verklebt.

Die Kombination der Schichten führt neben anderen mechanischen Eigenschaften auch zu der erforderlichen Zähigkeit der Siegelnahtverbindung, die dem fertigen Beutel die Form gibt. Dadurch wird verhindert, dass der Beutel bei einem Sturz aufplatzt und das Füllgut unbrauchbar wird.

Die Herstellung der erwähnten Schichtkombinationen ist vergleichsweise komplex. Es besteht daher der Wunsch nach einfacher herzustellenden, kostengünstigen und weniger Schichten, z.B. nur zwei Hauptschichten, umfassenden Laminaten. Die eingesetzten Materialien müssen verschiedene Eigenschaften in sich vereinigen, hauptsächlich aber verhindern, dass der fertige Beutel nach mehreren Stürzen entlang der Siegelnähte reisst.

Der Erfindung liegt die Aufgabe zugrunde, einen Siegelfilm bereitzustellen, der die Herstellung einer Siegelnaht mit schockabsorbierenden Eigenschaften ermöglicht.

Zur erfindungsgemässen Lösung der Aufgabe führt, dass der Siegelfilm aus wenigstens drei Schichten besteht, wobei einander benachbarte Schichten unterschiedliche Bruchzähigkeiten aufweisen.

Der Kern der Erfindung liegt in der Kombination mehrerer Schichten, die sich hinsichtlich der Bruchsicherheit besser verhalten als eine konventioneller Siegelfilm aus einer einzelnen, diskreten Schicht.

Der Effekt der Schockabsorption kommt vor allem zum Tragen, wenn der Siegelfilm mit einer weiteren Schicht, typischerweise mit einem Film aus orientiertem Polyethylenterephthalat (oPET), orientiertem Polypropylen (oPP) oder orientiertem Polyamid (oPA) kaschiert ist.

Bevorzugt ist der Siegelfilm aus alternierend angeordneten Schichten mit niedrigerer und höherer Bruchzähigkeit aufgebaut. Auf eine Schicht mit höherer Bruchzähigkeit folgt jeweils eine Schicht mit niedrigerer Bruchzähigkeit und umgekehrt. Diese Anordnung hat zur Folge, dass bei einem Sturz eines Beutels ein von einer Siegelnahtwurzel des Beutels ausgehender Riss in einer zähelastischen Schicht durch Aufnahme der in die Siegelnaht eingeleiteten kinetischen Energie durch plastische Verformung gestoppt wird. Der mehrschichtige Aufbau des Siegelfilms hat den weiteren Vorteil, dass ein einmal gestoppter und bei einem weiteren Sturz weiterlaufender Riss im einer nachfolgenden Schicht mit höherer Bruchzähigkeit emeut gestoppt wird, so dass ein Beutel aus einem Verpackungslaminat mit dem erfindungsgemässen Siegelfilm auch mehrere Stürze überstehen kann, ohne entlang einer Siegelnaht aufzuplatzen.

Die Schichten mit niedrigerer Bruchzähigkeit bestehen bevorzugt aus reinen Polyolefinen oder aus Blends von Polyolefinen, insbesondere aus Polyethylen, Polypropylen oder Blends von Polyethylen oder Polypropylen mit Copolymeren aus Ethylen und Propylen.

Die Schichten mit höherer Bruchzähigkeit bestehen bevorzugt aus thermoplastischen Elastomeren (TPE), insbesondere TPE auf der Basis von Styrol/Ethylen/Butylen/Styrol, Polyolefinen, EPR (synthetischer Kautschuk auf Basis Ethylen Propylen) oder EPDM (Terpolymer auf der Basis von Ethylen Propylen Dien Monomeren), Legierungen von Polyamid (PA) mit Polyolefinen, Blends von PP/EPR/PE, PPIEPDM, oder PE/EVA/EPDM, oder Impact-Copolymer Polypropylen (ICP).

Der erfindungsgemässe Siegelfilm kann auch aus alternierend angeordneten Schichten aus thermoplastischen Elastomeren (TPE) und Impact-Copolymer Polypropylen (ICP) aufgebaut sein.

Bei einer bevorzugten Variante des erfindungsgemässen Siegelfilms nimmt das zähelastische Verhalten der Schichten mit hoher Bruchzähigkeit über den Querschnitt des Siegelfilms stufenweise ab. Die Einstellung der Bruchzähigkeit der aufeinanderfolgenden Schichten mit höherer Bruchzähigkeit erfolgt bevorzugt über eine stufenweise reduzierte Konzentration eines Zähigkeitsmodifikators; wie z.B. eines TPE auf der Basis von Styrol/Ethylen/Butylen/Styrol oder eines thermoplastischen Olefins (TPO) vom Typ ADFLEX^{®}, zu einem Schichtmaterial auf der Basis von Polyolefinen.

Weitere Vorteile, Merkmale und Einzelheiten ergeben sich aus der nachfolgenden Beschreibung bevorzugter Ausführungsbeispiele sowie anhand der Zeichnung; diese zeigt schematisch in
- - Fig. 1: einen Querschnitt durch ein Verpackungslaminat mit schockabsorbierendem Siegelfilm;
- - Fig. 2: einen Querschnitt durch zwei gegeneinander gesiegelte Verpackungslaminate.

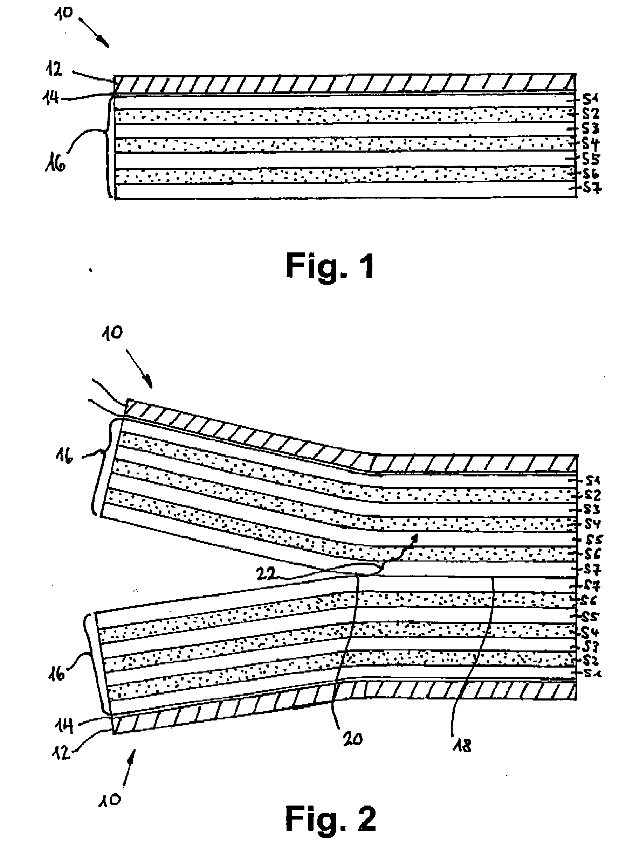

Eine in Fig. 1 gezeigtes Verpackungslaminat 10 zur Herstellung von Beuteln mit wenigstens einer Siegelnaht weist einen PET-Film 12 als Aussenseite und einen mit dem PET-Film 12 über einen Klebstofffilm 14 auf der Basis von beispielsweise Polyurethan verbundenen Siegelfilm 16 als Innen- oder Siegelseite auf. Der Siegelfilm 16 setzt sich zusammen aus sieben Schichten S1, S2, S3, S4, S5, S6, S7. Die Schichten S1, S3, S5 und S7 weisen eine niedrigere Bruchzähigkeit auf als die Schichten S2, S4 und S6. Der Siegelfilm ist aus altemierend angeordneten Schichten S1...S7 mit höherer und niedrigerer Bruchzähigkeit aufgebaut.

Die Schichten S1, S3, S5 und S7 mit niedrigerer Bruchzähigkeit bestehen beispielsweise aus Polypropylen.

Die Schichten S2, S4, S6 mit höherer Bruchzähigkeit bestehen beispielsweise aus einem thermoplastischen Elastomer (TPE) auf der Basis von Styrol / Ethylen / Butylen / Styrol.

Der Einfachheit halber ist in dem in der Zeichnung dargestellten Beispiel ein Siegelfilm 16 mit nur sieben Schichten S1....S7 gezeigt. Der Siegelfilm 16 kann jedoch bis zu fünfzehn und mehr Schichten aufweisen und umfasst vorzugsweise sieben bis neun Schichten.

Die Herstellung des Siegelfilms erfolgt über ein Blas- oder Giessverfahren. Die Dicke der einzelnen Schichten kann im Rahmen der technischen Möglichkeiten grundsätzlich frei gewählt werden. Die einzelnen Schichtdicken können innerhalb eines Siegelfilms gleich oder unterschiedlich sein.

Fig. 2 zeigt zwei unter Bildung einer Siegelnaht 18 gegeneinander gesiegelte Verpackungslaminate 10 von Fig. 1. Bei einem Sturz eines aus dem Verpackungslaminat 10 hergestellten Beutels wird insbesondere die dem Beutelinneren zugewandte Wurzel 20 der Siegelnaht 18 schlagartig beansprucht, so dass sich ein Riss 22 an der Siegelnahtwurzel 20 bildet und je nach Belastung durch angrenzende Schichten S7...S1 fortschreitet.

## Patentansprüche

1. Siegelfilm mit schockabsorbierenden Eigenschaften für ein Verpackungslaminat (10) zur Herstellung von Beuteln mit wenigstens einer Siegelnaht (18),
**dadurch gekennzeichnet, dass**
der Siegeffilm (16) aus wenigstens drei Schichten (S1...S7) besteht, wobei einander benachbarte Schichten unterschiedliche Bruchzähigkeiten aufweisen.

2. Siegelfilm nach Anspruch 1, **dadurch gekennzeichnet, dass** der Siegelfilm (16) aus alternierend angeordneten Schichten (S1, S3, S5, S7) mit niedrigerer und Schichten (S2, S4, S6) mit höherer Bruchzähigkeit besteht.

3. Siegelfilm nach Anspruch 1 oder 2, **dadurch gekennzeichnet, dass** die Schichten (S1, S3, S5, S7) mit niedrigerer Bruchzähigkeit aus reinen Polyolefinen oder Mischungen von Polyolefinen, insbesondere aus Polyethylen, Polypropylen oder Mischungen von Polyethylen oder Polypropylen mit Copolymeren aus Ethylen und Propylen bestehen.

4. Siegelfilm nach einem der Ansprüche 1 bis 3, **dadurch gekennzeichnet, dass** die Schichten (S2, S4, S6) mit höherer Bruchzähigkeit aus thermoplastischen Elastomeren (TPE), insbesondere TPE auf der Basis von Styrol/Ethylen/Butylen/Styrol, Polyolefinen, EPR (synthetischer Kautschuk auf Basis Ethylen Propylen) oder EPDM (Terpolymer auf der Basis von Ethylen Propylen Dien Monomeren), EVA (Ethylen-Vinylacetat) oder ICP (Impact-Copolymer Polypropylen) bestehen.

5. Siegetfilm nach einem der Ansprüche 1 bis 4, **dadurch gekennzeichnet, dass** die Bruchzähigkeit der Schichten (S2, S4, S6) mit höherer Bruchzähigkeit über den Querschnitt des Siegelfilms stufenweise abnimmt.

6. Siegelfilm nach Anspruch 5, **dadurch gekennzeichnet, dass** die Schichten (S2, S4, S6) mit höherer Bruchzähigkeit zur stufenweise Abnahme der Bruchzähigkeit eine stufenweise reduzierte Konzentration eines Zähigkeitsmodifikators, vorzugsweise eines TPE auf der Basis von Styrol/Ethylen/Butylen/Styrol, aufweisen.

7. Verpackungslaminat mit einem Siegelfilm (16) mit schockabsorbierenden Eigenschaften zur Herstellung von Beuteln mit wenigstens einer Siegelnaht (18),
**dadurch gekennzeichnet, dass**
der Siegelfilm (16) aus wenigstens drei Schichten (S1...S7) besteht, wobei einander benachbarte Schichten unterschiedliche Bruchzähigkeiten aufweisen.

8. Verpackungslaminat nach Anspruch 7, **dadurch gekennzeichnet, dass** der Siegelfilm aus alternierend angeordneten Schichten (S1, S3, S5, S7) mit niedrigerer und Schichten (S2, S4, S6) mit höherer Bruchzähigkeit besteht.

9. Verpackungslaminat nach Anspruch oder 8, **dadurch gekennzeichnet, dass** die Schichten (S1, S3, S5, S7) mit niedrigerer Bruchzähigkeit aus reinen Polyolefinen oder Mischungen von Polyolefinen, insbesondere aus Polyethylen, Polypropylen oder Mischungen von Polyethylen oder Polypropylen mit Copolymeren aus Ethylen und Propylen bestehen.

10. Verpackungslaminat nach einem der Ansprüche 7 bis 9, **dadurch gekennzeichnet, dass** die Schichten (S2, S4, S6) mit höherer Bruchzähigkeit aus thermoplastischen Elastomeren (TPE), insbesondere TPE auf der Basis von Styrol / Ethylen / Butylen / Styrol, Polyolefinen, EPR (synthetischer Kautschuk auf Basis Ethylen Propylen) oder EPDM (Terpolymer auf der Basis von Ethylen Propylen Dien Monomeren), Legierungen von Polyamid (PA) mit Polyolefinen, Blends von PP/EPR/PE. PP/EPDM. oder PE/EVA/EPDM, oder ICP (Impact-Copolymer Polypropylen) bestehen.

11. Verpackungslaminat nach einem der Ansprüche 7 bis 10, **dadurch gekennzeichnet, dass** die Bruchzähigkeit der Schichten (S2, S4, S6) mit höherer Bruchzähigkeit über den Querschnitt des Siegelfilms stufenweise abnimmt.

12. Siegelfilm nach Anspruch 5, **dadurch gekennzeichnet, dass** die Schichten (S2, S4, S6) mit höherer Bruchzähigkeit zur stufenweise Abnahme der Bruchzähigkeit eine stufenweise reduzierte Konzentration eines Zähigkeitsmodifikators, vorzugsweise eines TPE auf der Basis von Styrol/Ethylen/Butylen/Styrol, aufweisen.
